# EUROPEAN PATENT SPECIFICATION

(11) **EP 0 825 287 B1**
(45) Date of publication and mention of the grant of the patent: **16.04.2003**
(21) Application number: 96306025.6
(22) Date of filing: 19.08.1996
(51) Int. Cl.: D04H 1/56, D04H 1/54

(54) **Nonwoven fabric and filter medium made thereof and process for producing it**
Vliesstoff und daraus hergestelltes Filtermedium und Verfahren zur Herstellung
Etoffe non-tissée et materiau de filtratation à partir de celle-ci et procédé pour la production

(43) Date of publication of application: 25.02.1998
(73) Proprietor: TORAY INDUSTRIES, INC., Tokyo 103-8666 (JP)
(72) Inventor: Kondo, Goro, Otsu-shi, Shiga 520 (JP); Ando, Katsutoshi, Otsu-shi, Shiga 520 (JP); Sugano, Koji, Mishima-shi, Shizuoka 411 (JP)
(74) Representative: Coleiro, Raymond

(56) References cited:
- EP-A- 0 123 545
- US-A- 4 707 269
- US-A- 5 419 953
- PATENT ABSTRACTS OF JAPAN vol. 95, no. 001 & JP 07 003604 A (IDEMITSU PETROCHEM CO LTD), 6 January 1995,
- DATABASE WPI Section Ch, Week 9317 Derwent Publications Ltd., London, GB; Class F04, AN 93-141355 XP002027550 & SU 1 707 109 A (SYNTHETIC FIBRES RES INST) , 23 January 1992

## Description

The present invention relates to a nonwoven fabric having excellent foldability and high stiffness, a filter medium made thereof, and a process for producing it.

Nonwoven fabrics are in general used as filter media for filtering devices. They need good foldability and high stiffness when they are fabricated for incorporation into filtering devices. For example, a filter medium to be used in the pleated form for air filters needs good foldability and high stiffness to resist deformation by air pressure. On the other hand, a filter medium needs an adequate ability to collect particles. This requirement is met by a nonwoven fabric made of fine fibers; however, it has low stiffness and does not meet the above-mentioned requirements of good foldability and high stiffness at least if it is used alone.

A nonwoven fabric of uniform structure composed of fine fibers can be obtained by the melt-blow process. It may be further processed to impart the property of an electret. The resulting electret nonwoven fabric exhibits an improved collecting ability due to the electrostatic attraction effect without increasing pressure loss. However, being composed of unoriented fibers, the conventional melt-blown nonwoven fabrics suffer the disadvantage of being weaker than nonwoven fabrics composed of oriented fibers. Therefore, they tend to rupture during folding and to deform due to air pressure during use, such deformation causing a pressure loss.

There are several known means to impart stiffness to nonwoven fabrics, e.g. (1) by using a large amount of resin for fiber-to-fiber bonding, (2) by increasing their density by calendering, (3) by forming them from thick fibers, (4) by increasing their weight per square meter. However, the nonwoven fabrics resulting from these means suffer their respective disadvantages as follows when used as filter media: (1) the bonding resin increases the air flow resistance, (2) calendering presses the fibers and decreases interstices between fibers and hence increases the air flow pressure, (3) thick fibers form large interstices between fibers, and this impairs the collecting ability, (4) increasing the weight results in an increase in thickness of the nonwoven fabric and impairs foldability.

In the production of nonwoven fabrics, it has been regarded as important to separate single fibers from one another, and efforts have been made to achieve this object in the art. In other words, opening single fibers, thereby dispersing them, has always been an important requirement in the production of nonwoven fabrics not only from staple fibers by carding, but also from filaments by spin-bonding or from filaments by melt-blowing.

A nonwoven fabric in which single fibers are uniformly dispersed lacks the stiffness required of filter media. That is, simply dispersed and interlaced single fibers do not provide a high stiffness because each fiber between fixed points is not strong enough to function as a support.

If thicker fibers are used to cope with this situation, the result is a nonwoven fabric which is poor in collecting ability. In other words, it is difficult in the conventional nonwoven fabric to obtain both high stiffness and good collecting ability at the same time.

A nonwoven fabric in which fibers are arranged in the same direction as one another is disclosed in JP-A-53-38767(1978), JP-A-02-269859(1990), JP-A-03-64565(1991) and JP-A-04-161209(1992). However, nothing is mentioned therein about a nonwoven fabric which has the sufficient stiffness required of a filter medium, especially a pleated filter medium. A nonwoven sheet which is composed mainly of fine individual fibers, which are mainly oriented in one direction, and which also includes some yarn-like fiber bundles is disclosed in EP-A-0123 545.

A process of producing a laminate by press-bonding nonwoven fabrics is disclosed in JP-A-53-105573(1978). However, nothing is mentioned therein about the lamination of nonwoven fabrics having a sufficient stiffness.

The present invention addresses the problem of providing a nonwoven fabric which is free of the above-mentioned shortcomings involved in conventional technology and has an excellent foldability and high stiffness.

It also addresses the problems of providing a filter medium which has an excellent foldability and high stiffness as well as a high collecting ability and a process for producing the above-mentioned nonwoven fabric and filter medium.

In accordance with a first aspect, the present invention provides a nonwoven fabric comprising nonwoven fibers, (a) at least some, and preferably all, of which said fibers consist of fibers of thermoplastics material and (b) at least 50% by number of all of which said nonwoven fibers constitute fiber bundles formed by bonding together 2 to 20 single said fibers of thermoplastics material, which said fiber bundles are arranged substantially in the same direction as one another, the direction being at an angle within a range of ± 35 degrees with respect to the sheet machine direction of the nonwoven fabric.

Fiber bundles formed from the single fibers constituting the nonwoven fabric can impart, to the nonwoven fabric, a high collecting ability due to the individual single fibers and a high stiffness due to the bundle configuration. In addition, arranging the fiber bundles in one and the same direction the direction being at an angle within a range of ± 35 degrees with respect to the sheet machine direction of the nonwoven fabric can improve foldability of the nonwoven fabric when it is folded along a line perpendicular to the direction of arrangement.

According to a second aspect, the present invention provides a filter medium comprising a laminate, which. laminate comprises a nonwoven fabric in accordance with the first aspect of the invention and an air permeable fibrous sheet having an air permeability at least 5 cc/cm²/sec. This filter medium exhibits an improved collecting ability, in addition to the above-mentioned characteristics of the nonwoven fabric, owing to combination (by lamination) with the permeable fibrous sheet.

According to third and fourth aspects, the present invention provides a filtering device having a filter medium comprising the above-mentioned nonwoven fabric of the first aspect, or a filter medium in accordance with the second aspect, of the invention, each respectively in a pleated form.

According to a fifth aspect, the present invention provides a process for producing a nonwoven fabric in accordance with the first aspect, the process comprising the steps of: forcing a molten thermoplastic resin through a spinneret having holes arranged at intervals not larger than 1.0 mm at a throughput not smaller than 0.5 gram per hole per minute, thereby forming a flow of melt-blown fibers proceeding to a collecting drum whose axis of rotation is preferably offset laterally with respect to a vertical axial plane of the spinneret; and collecting the melt-blown fibers on the collecting drum in such a manner that the direction of the center line of the flow of melt-blown fibers is inclined at an angle within a range of 10-30 degrees inclusive with respect to the vertical axial plane of the spinneret to enable formation of bundles of melt-blown fibers and wherein the center line of the flow of melt-blown fibers makes an angle within a range of 5-20 degrees inclusive with respect to the tangent line that touches the collecting drum at a point where the center line of the flow of melt-blown fibers intersects the collecting drum to enable the bundles of melt-blown fibers to be arranged in the same direction as one another the direction being at an angle within a range of ± 35 degrees with respect to the sheet machine direction of the nonwoven fabric.

In accordance with a sixth aspect, the present invention provides a process for producing a filter medium according to the second aspect of the invention, the process comprising the steps of: forcing a molten thermoplastic resin through a spinneret having holes arranged at intervals not larger than 1.0 mm at a throughput not smaller than 0.5 gram per hole per minute, thereby forming a flow of melt-blown fibers proceeding to a collecting drum whose axis of rotation is preferably offset laterally with respect to a vertical axial plane of the spinneret, feeding an air permeable fibrous sheet having an air permeability not smaller than 5 cc/cm²/sec to the collecting drum; and collecting the melt-blown fibers on the air permeable fibrous sheet in such a manner that the direction of the center line of the flow of melt-blown fibers is inclined at an angle within a range of 10-30 degrees inclusive with respect to the vertical axial plane of the spinneret to enable formation of bundles of melt-blown fibers and wherein the center line of the flow of melt-blown fibers makes an angle within a range of 5-20 degrees inclusive with the tangent line which touches the collecting drum at a point where the center line of the flow of melt-blown fibers intersects the collecting drum to enable the bundles of melt-blown fibers to be arranged in the same direction as one another the direction being at an angle within a range of ± 35 degrees with respect to the sheet machine direction of the nonwoven fabric.

The spinneret and throughput as specified above permit the melt-blown single fibers to be readily bundled in space immediately after emergence from the spinneret. The inclined flow of melt-blown fibers promotes the bonding of single fibers. In addition, collecting the melt-blown fibers on the collecting drum in such a manner as specified above permits the fiber bundles to be arranged substantially in one direction in the desired nonwoven fabric or filter medium.

Preferred embodiments of the invention will now be described with reference to the accompanying drawings in which:
Fig. 1 is a scanning electron microscope photograph showing an essential part of a nonwoven fabric embodying the present invention;
Fig. 2 is a schematic diagram showing a process embodying the invention for producing a nonwoven fabric embodying the invention; and
Fig. 3 is a schematic diagram showing a process embodying the invention for producing a filter medium embodying the invention.

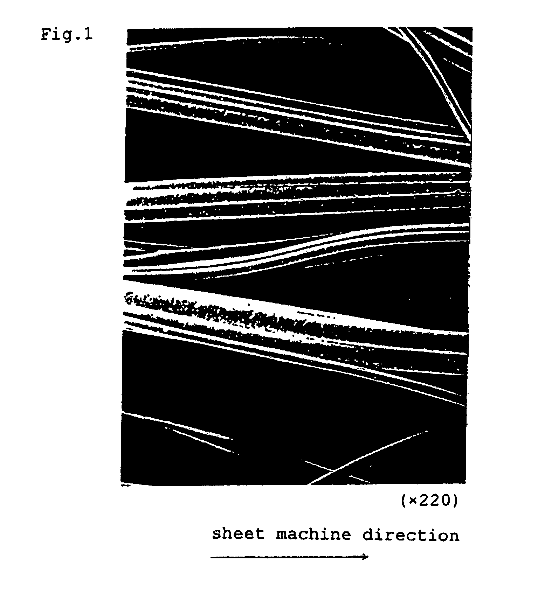

As shown under magnification in Fig. 1, which is a scanning electron microscope photograph, the nonwoven fabric of this embodiment according to the present invention is composed substantially of fiber bundles. Each of the fiber bundles is formed from a plurality of single fibers bonded together. Moreover, the fiber bundles are arranged substantially in one and the same direction parallel to the sheet machine direction and the fibers in each bundle are bonded to one another.

According to the present invention, the fiber bundles account for at least 50%, preferably at least 75%, of all the fibers constituting the nonwoven fabric.

In addition, the single fibers constituting the nonwoven fabric may be either filaments or staple fibers. Each fiber bundle has 2-20 single fibers and preferably an average of 8-12 single fibers. If the number of single fibers exceeds 20, the resulting nonwoven fabric has a high stiffness but is poor in foldability because the fiber bundles are excessively thick.

The fiber bundle is formed by bonding single fibers together. This bonding is preferably accomplished by self-bonding in a molten state, or may be with the aid of an adequate adhesive. How single fibers are bonded in the fiber bundle and how many single fibers constitute the fiber bundle may be easily found by observing the surface and the cross-section of a nonwoven fabric under a scanning electron microscope.

Many of fiber bundles which form the nonwoven fabric of the present invention are arranged substantially in one direction, preferably in one direction parallel to the sheet machine direction, instead of being dispersed randomly. The "sheet machine direction" mentioned herein means the direction in which the sheet of nonwoven fabric is taken up during its production process.

The nonwoven fabric of the present invention does not necessarily need uniform stiffness in all directions, but usually needs stiffness only in the sheet machine direction, because it is satisfactory for use as a filter medium if it exhibits a high stiffness in the direction perpendicular to the pleat which bears a heavy load during pleating and/or practical use.

The nonwoven fabric of the present invention comprises fiber bundles arranged in one direction, preferably parallel to the sheet machine direction, and hence it exhibits a high stiffness in that direction of arrangement. Therefore, if it is pleated such that the pleat intersects at right angles the direction in which the fiber bundles are arranged, the resulting pleated nonwoven fabric resists deformation by wind pressure and minimizes the pressure loss. In addition, the fiber bundles arranged in one direction impart a smooth surface to the nonwoven fabric and the smooth surface prevents fuzzing and rupture by friction with the pleating blade and facilitates the uniform, sharp pleating.

The direction of arrangement for fiber bundles is within a range of ±35 degrees, more preferably within a range of ±30 degrees, with respect to the sheet machine direction. With an angle outside the range ±35 degrees, the nonwoven fabric may be unsatisfactory in foldability and stiffness.

In the present invention, the above-mentioned angle was determined by observing the surface of the nonwoven fabric under a scanning electron microscope whose field of view is large enough to cover a length equal to 20-30 times the average fiber diameter. The result is expressed in terms of an average of 100 angles, each between the center line of the randomly selected fiber bundle and the sheet machine direction.

The single fiber forming the fiber bundle preferably has an average diameter of not smaller than 10µm and not larger than 50 µm, more preferably larger than 10µm and not larger than 30 µm. With an average diameter smaller than 10 µm, the fiber is so thin that the resulting nonwoven fabric is poor in foldability and stiffness although it is superior in collecting performance. Conversely, with an average diameter larger than 50 µm, the fiber is so thick that the resulting nonwoven fabric tends to rupture during pleating and become poor in collecting performance.

A nonwoven fabric of the present invention preferably has a weight of 40-150 g/m², more preferably 60-150 g/m². With a weight smaller than 40 g/m², the nonwoven fabric might not have the high stiffness required of the filter medium. Conversely, with a weight larger than 150 g/m², the nonwoven fabric may be poor in foldability due to its excessive thickness.

The nonwoven fabric of the present invention may comprises either staple fibers or filaments. A melt-blown nonwoven fabric is preferred because this permits single fibers to undergo self-bonding in a molten state in the fiber bundle when the nonwoven fabric is formed. The fibers of thermoplastics material may be produced from a molten thermoplastic resin (or raw material). This thermoplastic resin is not specifically restricted so long as it is a polymer capable of spinning. A polyolefin resin, particularly polypropylene, is preferable from the standpoint of spinnability.

Since the nonwoven fabric of the present invention is superior in foldability and stiffness as mentioned above, it will exhibit satisfactory performance even when it is used alone as a filter medium. It may also be used as a reinforcing material for a laminate with an air permeable fibrous sheet composed of fine fibers, and the laminate will function as a filter medium having particularly excellent collecting performance.

In other words, it is possible to improve greatly the nonwoven fabric in collecting performance, foldability and stiffness by making it into a laminate of composite structure. The laminate as a filter medium has a very long life because the nonwoven fabric comprising fiber bundles functions as a "prefilter" which collects large particles.

The air permeable fibrous sheet to be combined with the nonwoven fabric should have an air permeability not smaller than 5 cc/cm²/sec (i.e. 5cm³/cm²/sec), preferably not smaller than 20 cc/cm²/sec, with the upper limit preferably being 500 cc/cm²/sec. An excessively high permeability has an adverse effect on the collecting performance. More preferably, the air permeability in the range of 40-400 cc/cm²/sec inclusive. The fiber forming the air permeable fibrous sheet preferably has a single fiber fineness of an average diameter not larger than 10 µm so that it exhibits the desired collecting performance.

The air permeable fibrous sheet may be of single-layer structure or laminate composite structure. In addition, it is preferably a nonwoven fabric of staple fibers or filaments, especially one which is formed by the melt-blow process which yields a uniform sheet of fine fibers. It may be produced from any polymer capable of spinning. A preferred polymer is a polyolefin resin, particularly polypropylene.

Moreover, the air permeable fibrous sheet is preferably used in the form of an electret nonwoven fabric, so that it exhibits a better collecting performance with a lower pressure loss owing, to its electrostatic attraction. The methods for producing an electret can be accomplished by any known process, such as application of a high DC voltage for corona discharge to a fibrous sheet. In addition, the application of an electrostatic charge for producing an electret may be carried out once before or after or twice before and after lamination with the nonwoven fabric comprising fiber bundles.

The combination of the nonwoven fabric and permeable fibrous sheet should be made with an adequate bond strength sufficient for them not to separate from each other when they are folded (or pleated) or while they are in use. It is preferable that the bonding is made of melt bonding, preferably accomplished by collecting melt-blown fibers directly on the air permeable fibrous sheet while the non-woven fabric is being made. Bonding using melt-blown fibers in this way is simple to perform.

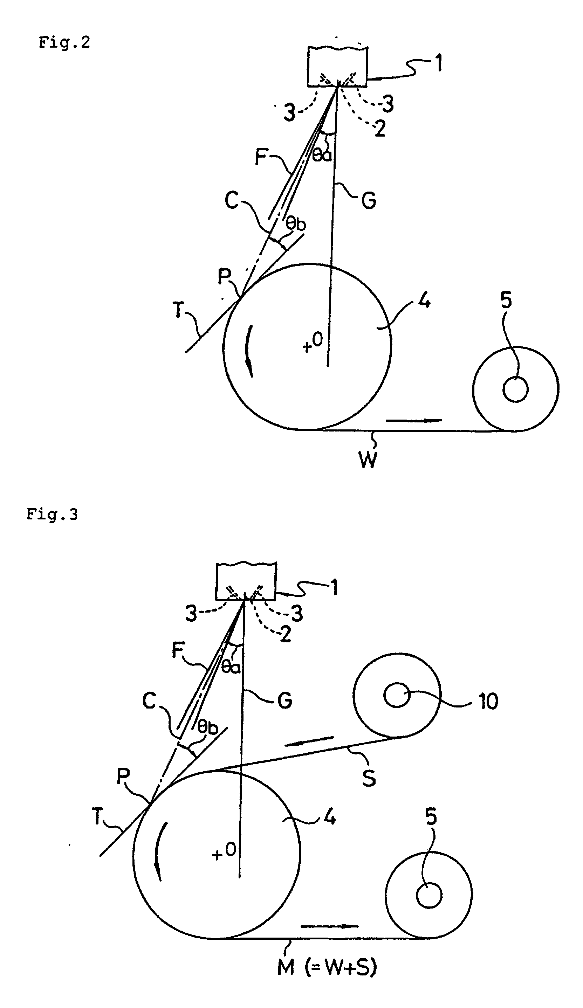

Fig.2 is a schematic diagram showing a process of producing the nonwoven fabric according to the present invention mentioned above.

In Fig.2, a spinneret assembly 1 has a spinneret 2 at the center thereof and nozzle slits 3,3 for heated gas jets at both sides of the spinneret. A molten thermoplastic resin is extruded through the spinneret 2, and the emergent filaments are blown downward by a heated gas jetting from the nozzle slits 3,3, so that a flow of melt-blown fibers F is formed.

A collecting drum 4 is provided under the spinneret assembly 1, so that the flow of melt-blown fibers F is collected on its circumference and a nonwoven fabric W is formed there. The collecting drum 4 is positioned such that its center of rotation O is offset laterally with respect to the vertical line G extending from the spinneret 2. Adjacent to the collecting drum 4 is a winder 5 to take up the nonwoven fabric W formed on the collecting drum 4.

The spinneret 2 has, in its base, a plurality of holes (not shown) which are arranged in a row at intervals not larger than 1.0 mm, with the direction of arrangement being perpendicular to the paper. The nozzle slits 3,3 are parallel to the lengthwise direction of arrangement of the holes. The heated gas jetting from the right nozzle slit has a higher pressure than that jetting from the left nozzle slit. This pressure difference will occur if the two nozzle slits differ in width or jetting pressure.

In the above-mentioned spinning apparatus, when a molten thermoplastic resin is extruded through the spinneret at a comparatively large throughput and streams of heated gas are jetted from the nozzle slits at different pressures, a flow of melt-blown fibers F is formed which is deflected leftward as shown in Fig.2. The flow proceeds to the upper-left side of the collecting drum 4 in Fig.2, and the melt-blown fibers are collected on the surface of the collecting drum.

The closely arranged spinning holes and the high throughput cause melt-blown fibers F emerging from a spinneret 2 readily to come into contact with one another in space, and moreover the intentionally inclined flow of melt-blown fibers enhances the contact of the melt-blown fibers, thereby forming fiber bundles in space.

For efficient bonding of single fibers in space, it is necessary that the intervals between the spinning holes be not larger than 1 mm, preferably not larger than 0.8 mm, and the throughput be not smaller than 0.5 g/min/hole, preferably not smaller than 0.7 g/min/hole, and further the flow of melt-blown fibers F be inclined such that the angle θa be in a range of 10-30 degrees inclusive between the center line C of the flow and the vertical line G under the spinneret 2.

If the intervals between the spinning holes is larger than 1 mm or the throughput is smaller than 0.5 g/min/hole, it is difficult to form the desired nonwoven fabric in which fiber bundles account for at least 50% of fibers. The upper limit of the throughput is preferably 3 g/min/hole so as to ensure the desired fiber quality. The lower limit of the hole intervals is preferably 0.2 mm so as to prevent the spinneret from being broken by pressure.

If the angle θa is smaller than 10 degrees, it is not enough for single fibers to come into contact with one another. On the contrary, if the angle θa is greater than 30 degrees, it leads to an unstable flow and hence unsatisfactory spinning.

The collecting drum 4 is positioned such that the center line C of the flow of melt-blown fibers F touches the collecting drum 4 at point P, with the touch angle θb being in a range of 5-20 degrees, preferably 5-15 degrees, which angle θb is defined as the one between the center line C and the tangent line T at point P (in other words, the angle at which the flow of melt-blown fibers F comes into a collision with the collecting dram 4).

This condition of the angle θb is necessary for the air stream accompanying melt-blown fibers F to flow smoothly, without turbulence, along the surface of the collecting drum 4. Such a smooth air flow permits the fiber bundles which have formed in space to be arranged substantially in one direction (sheet machine direction) at the time of collection. If the touch angle θb is smaller than 5 degrees, it is difficult to collect melt-blown fibers F on the collecting drum 4 to form nonwoven fabric. If it is greater than 20 degrees, the fiber bundles will scatter due to turbulence of the air flow on the collecting surface, instead of providing a regular arrangement in one direction.

In order to minimize the turbulence of the air flow on the collecting surface, it is preferable not to use suction from the inside of the collecting drum 4. In addition, it is preferable that the collecting drum be clear of any object which will cause turbulence of the air flow at the collecting surface.

The fiber forming the fiber bundles preferably has an average diameter not smaller than 10µm and not larger than 50µm, more preferably larger than 10µm and not larger than 30µm. Fiber bundles composed of excessively thin single fibers may drift away from the collecting drum due to the air stream because the touch angle θb is small, and this may prevent the nonwoven fabric from forming on the collecting drum or cause the fiber bundles to be twisted.

The collecting drum 4 is preferably positioned such that the distance between the spinneret 2 and the collecting surface is in a range of 30-90 cm, preferably 40-70 cm, inclusive, which is sufficient for single fibers to undergo fusion-bonding adequately. The collecting drum preferably has a smooth round surface so as to prevent disturbance at the surface of the nonwoven fabric. If the collecting drum has a flat surface, disturbance on the surface of the nonwoven fabric arises due to flow remaining after completion of collecting the fiber on the surface of the nonwoven fabric. When the collecting drum has the preferred smooth round surface, as soon as a flow of melt-blown fibers comes into collision with the surface of the collecting drum at an oblique angle, the air steam is separated from the surface of the nonwoven fabric formed.

Fig.3 shows a process for producing a filter medium, in which an air permeable fibrous sheet is fed in the production process for the nonwoven fabric shown in Fig.2. In Fig. 3, there is shown a rollstock 10 of permeable fibrous sheet S. The air permeable fibrous sheet S passes around the collecting drum 4 and goes to the winder 5. As it passes around the collecting drum 4, the nonwoven fabric W is formed on it in the same manner as mentioned above with reference to Fig.2. The nonwoven fabric W thus formed immediately undergoes melt-bonding with the air permeable fibrous sheet S. In this way there is obtained the filter medium M, which is a combination of the nonwoven fabric W and the air permeable fibrous sheet S. The filter medium is taken up by the winding machine 5.

The air permeable fibrous sheet S should be one which has an air permeability of at least 5 cm³/cm²/sec (cc/cm²/sec).

In respective preferred embodiments, the nonwoven fabric is an electret and a melt-blown, nonwoven fabric. Thus, in an especially preferred embodiment the fabric is an electret melt-blown nonwoven fabric.

Especially preferred embodiments of the invention are now described in more detail with reference to the following Examples.

### Example 1

A nonwoven fabric, 0.78 mm thick, having a weight of 100 g/m², was prepared from polypropylene resin using an apparatus as shown in Fig. 2 under the following conditions.
The spinneret has holes arranged in a row at intervals of 0.7 mm.
The heated air is jetted from the two nozzle slits respectively to the left and right of the spinneret at a pressure of 0.2 kg/cm² and 1.2 kg/cm², respectively.
The throughput of the molten polypropylene resin is 0.8 g/min/hole.
The angle θa between the center line of the flow of melt-blown fibers and the vertical line under the spinneret is 20 degrees.
The collecting position is 50 cm away.
The angle θb between the center line of the flow of melt-blown fibers and the tangent line at the collecting position is 10 degrees.

The surface and cross-section of the resulting non-woven fabric were observed under a scanning electron microscope. It was found that the nonwoven fabric included fiber bundles formed by bonding a plurality of single fibers, which accounted for 78% of all the fibers. The number of single fibers constituting the fiber bundles was 2-20 per bundle. The average diameter of the single fibers was 15 µm. The average angle made by the fiber bundles with the sheet machine direction was 27 degrees.

The nonwoven fabric exhibited a bending resistance of 210 mm in the sheet machine direction when tested by the 45° cantilever method. In other words, it was found to be very stiff.

The nonwoven fabric permitted continuous pleating (50 mm high) at a rate of 40 folds per minute without cracking and breaking. The pleated nonwoven fabric showed uniform folds which were stiff and highly resistant to the force exerted on crests of the folds.

### Example 2

A nonwoven fabric (as an air permeable fibrous sheet) having a weight of 15 g/m² and an air permeability of 37 cc/cm²/sec was prepared by the ordinary melt-blow process from polypropylene fibers having an average fiber diameter of 1.3 µm. This nonwoven fabric was electretised at a rate of 15 m/min by exposure to corona discharge which was generated by a DC voltage of 40 kV applied across electrodes 6 cm apart.

The electret nonwoven fabric (as a filter medium) was found to be able to catch 97% of polystyrene particles (0.3 µm) at a wind velocity of 1.5 m/min.

Then, a nonwoven fabric was formed under the same conditions as in Example 1 from polypropylene by the melt-blow process on the electret nonwoven fabric which was fed in using an apparatus as shown in Fig. 3. Thus there was obtained a laminate of nonwoven fabrics.

This laminate was found to have a weight of 115 g/m², a thickness of 0.89 mm, and a collecting efficiency of 96%.

In addition, it permitted continuous pleating under the same conditions as in Example 1 without cracking and breaking. The pleated specimen showed uniform folds which were stiff and highly resistant to the force exerted on the crests of the pleats. It was suitable for use as a high-performance filter medium.

### Comparative Example 1

A nonwoven fabric, 0.68 mm thick, having a weight of 100 g/m², was prepared from polypropylene resin using an apparatus specified below under the following conditions. The spinneret has holes arranged in a row at intervals of 1.4 mm.
The heated air is jetted from the two nozzle slits respectively to the left and right of the spinneret at an equal pressure of 0.5 kg/cm².
The throughput of the molten polypropylene resin is 0.4 g/min/hole.
The flow of melt-blown fiber is directed perpendicularly to the surface of a collecting drum of 50-mesh wire net, with a suction applied from the inside of the collecting drum at -3.9KPa (-400 mmAq).
The collecting position is 50 cm away.

The surface and cross-section of the resulting non-woven fabric were observed under a scanning electron microscope. It was found that the nonwoven fabric consists substantially of scattered single fibers and fiber bundles accounted for only 5% of all the fibers. The average diameter of the single fibers was 16 µm. The average angle made by the single fibers (which were not arranged in one direction but were randomly scattered) with the sheet machine direction was 47 degrees.

The nonwoven fabric exhibited a bending resistance of 95 mm in the sheet machine direction. During pleating (50 mm high) under the same conditions as in Example 1, it broke due to friction with the folding blade and gave folds with irregular heights and intervals. The resulting pleated sample was so weak as to be crushed easily under pressure applied to the crests of the folds.

### Comparative Example 2

A nonwoven fabric was formed under the same conditions as in Comparative Example 1 from polypropylene by the melt-blow process on the same air permeable fibrous sheet material (but not electret) as that used in Example 2, which was fed continuously to the collecting drum used in Comparative Example 1. Thus, a laminate of nonwoven fabrics was obtained. Incidentally, the nonwoven fabric used as the air permeable fibrous sheet for lamination in Example 2 had a collecting efficiency of 38%.

The resulting laminate was found to have a weight of 115 g/m², a thickness of 0.78 mm, and a collecting efficiency of only 41%.

During pleating (50 mm high) under the same conditions as in Example 1, it broke or cracked at the crests of the folds and gave folds with irregular heights and intervals. The resulting pleated sample was so weak as to be crushed easily under pressure applied to the crests.

### Example 3

A nonwoven fabric, 0.45 mm thick, having a weight of 60 g/m², was prepared from polypropylene resin using an apparatus as shown in Fig. 2 under the following conditions.
The spinneret has holes arranged in a row at intervals of 1.0 mm.
The heated air is jetted from the two nozzle slits respectively to the left and right of the spinneret at a pressure of 0.2 kg/cm² and 0.7 kg/cm², respectively.
The throughput of the molten polypropylene resin is 0.6 g/min/hole.
The angle θa between the center line of the flow of molt-blown fibers and the vertical line under the spinneret is 10 degrees.
The collecting position is 40 cm away. The angle θb between the center line of the flow of molt-blown fibers and the tangent line at the collecting position is 20 degrees.

The surface and cross-section of the resulting non-woven fabric were observed under a scanning electron microscope. It was found that the nonwoven fabric included fiber bundles formed by bonding a plurality of single fibers, which accounted for 60% of all the fibers. The number of single fibers constituting the fiber bundles was 2-20 per bundle. The average diameter of the single fibers was 22 µm. The average angle made by the fiber bundles with the sheet machine direction was 33 degrees.

The nonwoven fabric exhibited a bending resistance of 165 mm in the sheet machine direction. In other words, it was found to be very stiff. The nonwoven fabric permitted continuous pleating (30 mm high) at a rate of 30 folds per minute without cracking and breaking. The pleated nonwoven fabric showed uniform folds which were stiff and highly resistant to the force exerted on the crests of the pleats.

### Example 4

A nonwoven fabric (as an air permeable fibrous sheet) having a weight of 30 g/m² and an air permeability of 65 cc/cm²/sec was prepared by the ordinary melt-blow process from polypropylene fibers having an average diameter of 3 µm. This nonwoven fabric was electretised at a rate of 15 m/min by exposure to corona discharge which was generated by a DC voltage of 40 kV applied across electrodes 6 cm apart.

The electret nonwoven fabric (as a filter medium) was found to have a collecting efficiency of 86%.

Then, a nonwoven fabric was formed under the same conditions as in Example 3 from polypropylene by the melt-blow process on the electret nonwoven fabric which was fed in using the same apparatus as used in Example 3. Thus there was obtained a laminate of nonwoven fabrics. This laminate was found to have a weight of 90 g/m², a thickness of 0.65 mm, and a collecting efficiency of 86%.

In addition, it permitted continuous, uniform pleating under the same conditions as in Example 3. The pleated specimen was suitable for use as a high-performance filter medium.

### Example 5

A nonwoven fabric, 1.20 mm thick, having a weight of 150 g/m², was prepared from polypropylene resin using an apparatus as shown in Fig. 2 under the following conditions.
The spinneret has holes arranged in a row at intervals of 1.0 mm.
The heated air is jetted from the two nozzle slits respectively to the left and right of the spinneret at a pressure of 0.25 kg/cm² and 0.9 kg/cm², respectively.
The throughput of the molten polypropylene resin is 0.6 g/min/hole.
The angle θa between the center line of the flow of molt-blown fibers and the vertical line under the spinneret is 15 degrees.
The collecting position is 70 cm away. The angle θb between the center line of the flow of molt-blown fibers and the tangent line at the collecting position is 15 degrees.

The surface and cross-section of the resulting non-woven fabric were observed under a scanning electron microscope. It was found that the nonwoven fabric included fiber bundles formed by bonding a plurality of single fibers, which accounted for 69% of all the fibers. The number of single fibers constituting the fiber bundles was 2-20 per bundle. The average diameter of single fibers was 12 µm. The average angle made by the fiber bundles with the sheet machine direction was 30 degrees.

The nonwoven fabric exhibited a bending resistance of 290 mm in the sheet machine direction. In other words, it was found to be very stiff. When tested for filtering performance, it exhibited a pressure loss of 2.16Pa (0.22 mmAq) for polystyrene particles (0.3 µm in diameter) at a wind velocity of 1.5 m/min, with a collecting efficiency of 25%.

The nonwoven fabric permitted continuous pleating (150 mm high) without cracking and breaking. The pleated nonwoven fabric showed uniform folds which were stiff and highly resistant to the force exerted on the crests of the pleats.

### Comparative Example 3

A nonwoven fabric, 0.44 mm thick, having a weight of 60 g/m², was prepared using the same apparatus as used in Example 3, with the operating conditions modified as follows.
The heated air is jetted from the two nozzle slits respectively to the left and right of the spinneret at a pressure of 0.3 kg/cm² and 0.4 kg/cm², respectively.
The angle θa between the center line of the flow of melt-blown fibers and the vertical line under the spinneret is 5 degrees.
The collecting position is 40 cm away.
The angle θb between the center line of the flow of melt-blown fibers and the tangent line at the collecting position is 30 degrees.

The surface and cross-section of the resulting non-woven fabric were observed under a scanning electron microscope. It was found that the nonwoven fabric included fiber bundles formed by bonding a plurality of single fibers, which accounted for 45% of all the fibers. The number of single fibers constituting fiber bundles was 2-20 per bundle. The average diameter of the single fibers was 20 µm. The average angle made by the fiber bundles with the sheet machine direction was 38 degrees. The nonwoven fabric exhibited a bending resistance of 115 mm in the sheet machine direction.

It permitted pleating only at a low rate of 15 folds per minute. The resulting folds were irregular and so weak to be deformed under pressure exerted on the crests of the pleats.

### Comparative Example 4

The same procedure as in Comparative Example 3 was repeated except that the angle θb was changed to 60 degrees. Thus there was obtained a nonwoven fabric, 0.42 mm thick, having a weight of 60 g/m². Microscopic observation revealed that it included fiber bundles which accounted for 24% of all the fibers. The average diameter of the single fibers was 23 µm. The average angle made by the fiber bundles with the sheet machine direction was 43 degrees. The bending resistance was 80 mm in the sheet machine direction.

Pleating was possible only at a low rate of 15 folds per minute. The resulting folds were more irregular than those in Comparative Example 3 and so weak to be deformed under pressure exerted on the crests of the pleats.

### Comparative Example 5

A nonwoven fabric, 0.51 mm thick, having a weight of 60 g/m² was prepared in the same manner as in Example 3 except that the throughput was changed to 0.4 g/min/hole.

The average diameter of the single fibers was 7 µm. The amount of fiber bundles was 45% of all the fibers. The average angle of the fiber bundles to the sheet machine direction was 36 degrees. The bending resistance in the sheet machine direction was 125 mm.

This nonwoven fabric underwent pleating (30 mm high) at a rate of 30 folds per minute. It became fuzzy due to friction with the folding blade, and the resulting folds were irregular in shape and weak. It was not suitable for use as a filter medium.

### Comparative Example 6

The same procedure as in Example 3 was repeated except that the throughput was changed to 0.2 g/min/hole. It was impossible to collect single fibers on the collection drum because they were blown away by the jet air stream. The average diameter of single fibers was 3 µm.

## Claims

1. A nonwoven fabric comprising nonwoven fibers, (a) at least some of which nonwoven fibers consist of fibers of thermoplastics material and (b) at least 50% by number of all of which said nonwoven fibers constitute fiber bundles, which said fiber bundles are arranged in the same direction as one another, the direction being at an angle within a range of ±35 degrees with respect to the sheet machine direction of the nonwoven fabric, **characterised in that** the said fiber bundles comprise 2-20 single said fibers of thermoplastics material bonded together.

2. A nonwoven fabric according to Claim 1, wherein the single fibers constituting the fiber bundles have an average diameter of 10-50 µm.

3. A nonwoven fabric according to Claim 1 or 2, which has a weight of 40-150 g/m².

4. A nonwoven fabric according to any one of Claims 1 to 3, which is formed from melt-blown fibers.

5. A nonwoven fabric according to any one of Claims 1 to 4, wherein the single fibers constituting the fiber bundles are made of polyolefin resin.

6. A pleated filter medium which comprises a nonwoven fabric as claimed in any one of claims 1 to 5.

7. A filter medium comprising a laminate, which laminate comprises the nonwoven fabric according to any one of Claims 1 to 6 and an air permeable fibrous sheet having an air permeability at least 5cm³/cm²/sec (5 cc/cm²/sec).

8. A filter medium according to Claim 7, wherein the nonwoven fabric and the air permeable fibrous sheet are combined by melt bonding between their fibers.

9. A filter medium according to Claim 7 or 8, wherein at least either of the nonwoven fabric and the air permeable fibrous sheet is an electret.

10. A process for producing a nonwoven fabric as claimed in claim 1, the process comprising the steps of: forcing a molten thermoplastic resin through a spinneret (2) having holes (3) arranged at intervals not larger than 1.0 mm at a throughput not smaller than 0.5 gram per hole per minute, thereby forming a flow of melt-blown fibers (F) proceeding to a collecting drum (4); and collecting the melt-blown fibers (F) on the collecting drum (4) in such a manner that the direction of the center line (C) of the flow of melt-blown fibers (F) is inclined at an angle (θa) within a range of 10-30 degrees inclusive with respect to the vertical axial plane (G) of the spinneret (2), to promote bonding of the single fibers in space, and thereby enable formation of bundles of melt-blown fibres (F), and wherein the center line (C) of the flow of melt-blown fibers (F) makes an angle (θb) within a range of 5-20 degrees inclusive with respect to the tangent line (T) which touches the collecting drum (4) at a point (P) where the center line (C) of the flow of melt-blown fibers intersects the collecting drum (4) to enable the bundles of melt-blown fibers (F) to be arranged in the same direction as one another, the direction being at an angle within a range of ±35 degrees with respect to the sheet machine direction of the nonwoven fabric, which process thereby forms the nonwoven fabric of claim 1 in which fiber bundles comprising 2-20 single fibers account for at least 50% of the fibers.

11. A process for producing a filter medium as claimed in claim 7, the process comprising the steps of: forcing a molten thermoplastic resin through a spinneret (2) having holes (3) arranged at intervals not larger than 1.0 mm at a throughput not smaller than 0.5 gram per hole per minute, thereby forming a flow of melt-blown fibers (F) proceeding to a collecting drum (4), feeding an air permeable fibrous sheet (10) having an air permeability not smaller than 5cm³/cm²/sec (5 cc/cm²/sec) to the collecting drum (4); and collecting the melt-blown fibers (F) on the air permeable fibrous sheet (S) in such a manner that the direction of the center line (C) of the flow of melt-blown fibers (F) is inclined at an angle (θa) within a range of 10-30 degrees inclusive with respect to the vertical axial plane (G) of the spinneret to promote bonding of the single fibers in space and thereby enable formation of bundles of melt-blown fibers (F), and wherein the center line (C) of the flow of melt-blown fibers (F) makes an angle (θb) within a range of 5-20 degrees inclusive with respect to the tangent line (T) which touches the collecting drum (4) at a point (P) where the center line (C) of the flow of melt-blown fibers (F) intersects the collecting drum (4) to enable the bundles of melt-blown fibers (F) to be arranged in the same direction as one another, which process thereby forms the nonwoven fabric of claim 1 in which fiber bundles comprising 2-20 single fibers account for at least 50% of the fibers.

12. A process according to Claim 11, wherein the air permeable fibrous sheet is an electret nonwoven fabric.

13. A filtering device having a filter medium comprising a nonwoven fabric according to any one of Claims 1 to 5, which said nonwoven fabric assumes a pleated form.

14. A filtering device having a filter medium according to any one of Claims 7 to 9, which said filter medium assumes a pleated form.

## Patentansprüche

1. Vliesstoff, der nichtgewebte Fasern umfasst, wobei (a) zumindest einige der nichtgewebten Fasern aus thermoplastischem Material bestehen und (b) zumindest 50 % der Gesamtanzahl aller nichtgewebten Fasern in Faserbündeln auftreten, wobei die Faserbündel alle in dieselbe Richtung ausgerichtet sind, wobei diese Richtung in einem Winkel im Bereich von ± 35° zur Maschinenrichtung der Vliesstofflage steht, **dadurch gekennzeichnet, dass** die Faserbündel 2 bis 20 einzelne, miteinander verklebte Fasern aus thermoplastischem Material umfassen.

2. Vliesstoff nach Anspruch 1, worin die einzelnen Fasern der Faserbündel einen mittleren Durchmesser von 10 bis 50 µm aufweisen.

3. Vliesstoff nach Anspruch 1 oder 2, der ein Gewicht von 40 bis 150 g/m² aufweist.

4. Vliesstoff nach einem der Ansprüche 1 bis 3, der aus schmelzgeblasenen Fasern besteht.

5. Vliesstoff nach einem der Ansprüche 1 bis 4, worin die einzelnen Fasern der Faserbündel aus Polyolefinharz bestehen.

6. Faltenfiltermedium, welches einen Vliesstoff nach einem der Ansprüche 1 bis 5 umfasst.

7. Filtermedium, umfassend ein Laminat, welches aus einem Vliesstoff nach einem der Ansprüche 1 bis 6 und einer luftdurchlässigen Faserlage mit einer Luftdurchlässigkeit von zumindest 5 cm³/cm²/s (5 cc/cm²/s) besteht.

8. Filtermedium nach Anspruch 7, worin der Vliesstoff und die luftdurchlässige Faserlage durch Zusammenschmelzen ihrer Fasern verbunden werden.

9. Filtermedium nach Anspruch 7 oder 8, worin zumindest entweder der Vliesstoff oder die luftdurchlässige Faserlage ein Elektret ist.

10. Verfahren zur Herstellung eines Vliesstoffes nach Anspruch 1, wobei das Verfahren die folgenden Schritte umfasst: Pressen eines geschmolzenen thermoplastischen Harzes durch eine Spinndüse (2), die in Abständen von nicht mehr als 1,0 mm angeordnete Löcher (3) aufweist, mit einem Durchsatz von nicht weniger als 0,5 Gramm pro Loch pro Minute, wodurch ein Fluss aus schmelzgeblasenen Fasern (F) entsteht, der zu einer Sammeltrommel (4) weiterführt; und Sammeln der schmelzgeblasenen Fasern (F) auf der Sammeltrommel (4) in solcher Weise, dass die Richtung der Mittelachse (C) des Flusses aus schmelzgeblasenen Fasern (F) in einem Winkel (θa) im Bereich von 10° bis 30° zur Vertikalachsenebene (G) der Spinndüse (2) steht, um ein räumliches Verkleben der einzelnen Fasern und dadurch die Bildung von Faserbündeln (F) zu fördern, und worin die Mittelachse (C) des Flusses aus schmelzgeblasenen Fasern (F) in einem Winkel (θb) im Bereich von 5° bis 20° zur Tangente (T) steht, welche die Sammeltrommel (4) an einem Punkt (P) berührt, an dem die Mittelachse (C) des Flusses aus schmelzgeblasenen Fasern die Sammeltrommel (4) schneidet, damit die Bündel aus schmelzgeblasenen Fasern (F) jeweils im Wesentlichen in dieselbe Richtung ausgerichtet werden, wobei diese Richtung in einem Winkel im Bereich von ± 35° zur Maschinenrichtung der Vliesstofflage steht, wodurch das Verfahren einen Vliesstoff gemäß Anspruch 1 ergibt, in dem Faserbündel aus 2 bis 20 einzelnen Fasern zumindest 50 % der Fasern ausmachen.

11. Verfahren zur Herstellung eines Filtermediums nach Anspruch 7, wobei das Verfahren die folgenden Schritte umfasst: Pressen eines geschmolzenen thermoplastischen Harzes durch eine Spinndüse (2), die in Abständen von nicht mehr als 1,0 mm angeordnete Löcher (3) aufweist, mit einem Durchsatz von nicht weniger als 0,5 Gramm pro Loch pro Minute, wodurch ein Fluss aus schmelzgeblasenen Fasern (F) entsteht, der zu einer Sammeltrommel (4) weiterführt, Zuführen einer luftdurchlässigen Faserlage (10) mit einer Luftdurchlässigkeit von nicht weniger als 5 cm³/cm²/s (5 cc/cm²/s) zur Sammeltrommel; und Auffangen der schmelzgeblasenen Fasern (F) auf der luftdurchlässigen Faserlage (S) in solcher Weise, dass die Richtung der Mittelachse (C) des Flusses aus schmelzgeblasenen Fasern (F) in einem Winkel (θa) im Bereich von 10° bis 30° zur Vertikalachsenfläche (G) der Spinndüse steht, um ein räumliches Verkleben der einzelnen Fasern und dadurch die Bildung von Faserbündeln (F) zu fördern, und worin die Mittelachse (C) des Flusses aus schmelzgeblasenen Fasern (F) in einem Winkel (θb) im Bereich von 5° bis 20° zur Tangente (T) steht, welche die Sammeltrommel (4) an einem Punkt (P) berührt, an dem die Mittelachse (C) des Flusses aus schmelzgeblasenen Fasern die Sammeltrommel (4) schneidet, damit die Bündel aus schmelzgeblasenen Fasern (F) im Wesentlichen in dieselbe Richtung ausgerichtet werden, wodurch das Verfahren einen Vliesstoff nach Anspruch 1 ergibt, in dem Faserbündel aus 2 bis 20 einzelnen Fasern zumindest 50 % der Fasern ausmachen.

12. Verfahren nach Anspruch 11, worin die luftdurchlässige Faserlage ein Elektret-Vliesstoff ist.

13. Filtervorrichtung mit einem Filtermedium das einen Vliesstoff nach einem der Ansprüche 1 bis 5 umfasst, wobei der Vliesstoff eine gefaltete Form annimmt.

14. Filtervorrichtung mit einem Filtermedium nach einem der Ansprüche 7 bis 9, wobei das Filtermedium eine gefaltete Form annimmt.

## Revendications

1. Etoffe non-tissée comprenant de fibres non-tissées,
(a) au moins quelques-unes de ces fibres non-tissées sont constituées de fibres en matériau thermoplastique et
(b) au moins 50% en nombre de toutes lesdites fibres non-tissées constituent des paquets de fibres, lesdits paquets de fibres étant agencés dans la même direction les uns aux autres, la direction s'étendant selon un angle dans une plage de ± 35 degrés par rapport à la direction de la machine de l'étoffe non-tissée, **caractérisée en ce que** lesdits paquets de fibres comprennent 2-20 fibres uniques précitées en matériau thermoplastique liées ensemble.

2. Etoffe non-tissée selon la revendication 1, où les fibres individuelles constituant les paquets de fibres ont un diamètre moyen de 10-50 µm.

3. Etoffe non-tissée selon la revendication 1 ou 2, qui a un poids de 40-150 g/m².

4. Etoffe non-tissée selon l'une des revendications 1 à 3, qui est formée par des fibres réalisées par fusion-soufflage.

5. Etoffe non-tissée selon l'une des revendications 1 à 4, où les fibres individuelles constituant les paquets de fibres sont réalisées en une résine de polyoléfine.

6. Moyen formant filtre plissé, qui comprend une étoffe non-tissée telle que revendiquée dans l'une des revendications 1 à 5.

7. Moyen formant filtre comprenant un laminé, ce laminé comprenant l'étoffe non-tissée selon l'une des revendications 1 à 6 ainsi qu'une feuille fibreuse perméable à l'air d'une perméabilité à l'air d'au moins 5 cm³/cm²/sec (5 cc/cm²/sec).

8. Moyen formant filtre selon la revendication 7, où l'étoffe non-tissée et la feuille fibreuse perméable à l'air sont combinées par fusion entre leurs fibres.

9. Moyen formant filtre selon la revendication 7 ou 8, où au moins l'une parmi l'étoffe non-tissée et la feuille fibreuse perméable à l'air est un électrète.

10. Procédé de fabrication d'une étoffe non-tissée selon la revendication 1, le procédé comprenant les étapes consistant à :
forcer une résine thermoplastique fondue à travers une filière (2) présentant des trous (3) agencés à des intervalles non supérieurs à 1,0 mm à un débit non inférieur à 0,5 gramme par trou par minute, en formant ainsi un flux de fibres fondues soufflées (F) avançant vers un tambour de collecte (4) ; et recueillir les fibres fondues-soufflées (F) sur le tambour de collecte (4) de telle manière que la direction de la ligne centrale (C) du flux des fibres fondues-soufflées (F) est inclinée selon un angle (θa) dans une plage de 10-30 degrés inclus par rapport au plan axial vertical (G) de la filière (2) pour encourager la liaison des fibres individuelles dans l'espace et pour permettre ainsi la formation de paquets de fibres fondues-soufflées (F), et où la ligne centrale (C) du flux de fibres fondues-soufflées (F) forme un angle (θb) dans une plage de 5-20 degrés inclus par rapport à la ligne tangente (T) qui touche le tambour de collecte (4) à un point (P) où la ligne centrale (C) de l'écoulement des fibres fondues-soufflées croise le tambour de collecte (4) pour permettre que les paquets de fibres fondues-soufflées (F) soient agencés sensiblement dans la même direction les uns aux autres, la direction se situant à un angle dans une plage de ± 35° par rapport à la direction machine de l'étoffe non-tissée, ce procédé forme ainsi l'étoffe non-tissée de la revendication 1 où les paquets de fibres comprenant 2-20 fibres uniques représentent au moins 50% des fibres.

11. Procédé de fabrication d'un moyen formant filtre selon la revendication 7, le procédé comprenant les étapes consistant à :
forcer une résine thermoplastique fondue à travers une filière (2) présentant des trous (3) agencés à des intervalles non supérieurs à 1,0 mm selon un débit non inférieur à 0,5 gramme par trou par minute, en formant ainsi un flux de fibres fondues-soufflées (F) avançant vers un tambour de collecte (4), amener une feuille fibreuse perméable à l'air (10) d'une perméabilité à l'air non inférieure à 5 cm³/cm²/sec (5 cc/cm²/sec) au tambour de collecte (4) ; et recueillir les fibres fondues-soufflées (F) sur la feuille fibreuse perméable à l'air (S) de telle manière que la direction de la ligne centrale (C) du flux des fibres fondues-soufflées (F) est inclinée selon un angle (θa) dans une plage de 10-30 degrés inclus par rapport au plan axial vertical (G) de la filière pour encourager la liaison des fibres individuelles dans l'espace et pour permettre ainsi la formation de paquets de fibres fondues-soufflées (F), et où la ligne centrale (C) du flux de fibres fondues-soufflées (F) forme un angle (θb) dans une plage de 5-20 degrés inclus par rapport à la ligne tangente (T) qui touche le tambour de collecte (4) à un point (P) où la ligne centrale (C) du flux des fibres fondues-soufflées (F) croise le tambour de collecte (E) pour permettre que les paquets de fibres fondues-soufflées (F) soient agencés sensiblement dans la même direction les uns aux autres, ce procédé formant ainsi l'étoffe non-tissée de la revendication 1 où les paquets de fibres comprenant 2-20 fibres individuelles représentent au moins 50% des fibres.

12. Procédé selon la revendication 11, où la feuille fibreuse perméable à l'air est une étoffe non-tissée d'électrète.

13. Dispositif de filtration comportant un moyen formant filtre comprenant une étoffe non-tissée selon l'une des revendications 1 à 5, où ladite étoffe non-tissée a une forme plissée.

14. Dispositif de filtration comportant un moyen formant filtre selon l'une des revendications 7 à 9, où ledit moyen formant filtre a une forme plissée.
